# EUROPEAN PATENT APPLICATION

(11) **EP 2 045 548 A1**
(43) Date of publication of application: **08.04.2009**
(21) Application number: 07425626.4
(22) Date of filing: 05.10.2007
(51) Int. Cl.: F25B 49/02

(54) **Refrigerating unit**

(71) Applicant: Frigo System S.p.A., 36060 Fellette di Romano d'Ezzelino (VI) (IT)
(72) Inventor: Chiarello, Roberto, 36060 Fellette di Romano d'Ezzelino (VI) (IT); Gnoato, Palmiro, 36060 Fellette di Romano d'Ezzelino (VI) (IT)
(74) Representative: Vinci, Marcello

(57) **Abstract**

The invention is a new refrigerating unit with at least one refrigeration circuit with two or more compressors (C1, C2, ...,), each one of the compressors being equipped with a motor regulated by an inverter of its own, and wherein the rotation speeds of said motors of said compressors (C1, C2) are independent of one another and vary according to the operating conditions. The new refrigerating unit also comprises at least one electronic control unit suited to process the data concerning said operating conditions and to vary the rotation speeds of two or more of said compressors (C1, C2, ...) accordingly.

## Description

The present invention concerns refrigerating units and in particular it concerns a new refrigerating unit with multiple compressors that are regulated independently by means of an inverter, particularly suited to be used in refrigerated counters or cold rooms.

Refrigerating units with multiple compressors are known, wherein said compressors are all connected in parallel, in the same refrigeration circuit, with a condenser, several expansion valves and several evaporators, within which a coolant is kept circulating.

For example, refrigerating units with three or four compressors are known, wherein, usually, in case of malfunction of one of said compressors, the remaining ones are capable of meeting the thermal requirements only partially (60-70%).

All of said compressors operate in the on-off mode and therefore supply the system with pressure values that vary in a discontinuous manner, "in steps", according to the needs.

In particular, with n compressors of the same size, each one of them keeps in circulation a n^{th} part of the coolant flow rate, so that, for example, when more power is required, one, two or three compressors are progressively switched on, thus increasing the coolant flow rate accordingly, while if less power is required, the compressors are switched off, and two or just one of them are/is left on, so that also the flow rate of the coolant in circulation is reduced accordingly.

Refrigerating units with three or four compressors in parallel are also known, wherein the motor of one of said compressors is regulated by an electronic inverter.

The inverter device varies the frequency of the power supply voltage of the compressor motor within a pre-established interval, so that the power absorbed by the compressor can be modulated in a continuous manner.

Thus, the refrigeration capacity is not modulated discontinuously, in steps, as in the traditional refrigerating units with multiple compressors, since the compressor with inverter allows the power to be modulated between one step and the next one.

Obviously, said modulation reduces operating costs and consumption, since the electric power absorbed by the compressor is suited to the power requirements, that is, when the pressure value measured, and therefore the temperature of the cold source, is near the set value to be maintained, power is reduced in proportion to the heat load, while when the temperature drop is higher, power is increased.

Modulation, however, is not complete, in fact when the compressor with inverter, operating at the maximum frequency, is switched off and one of the compressors without inverter is started, a "power hole" occurs between the switching off of the compressor with inverter at max. power and the switching on of the compressor without inverter, which limits the advantages of the application.

In order to overcome the drawbacks mentioned above, a new type of refrigerating unit has been designed and constructed, said refragerating unit being equipped with multiple compressors that are regulated independently via an inverter, said refrigerating unit being particularly suitable for use in refrigerated counters or cold rooms, and in devices in general that require a certain refrigeration capacity in order to be able to serve their function.

An interesting and useful application of the new type of refrigerating unit is in refrigerated counters or wall-mounted refrigerators or cold rooms of small and medium-size food shops, where the refrigerators must operate continuously in order to maintain the product preservation temperature as constant as possible.

An important object of the present invention is to guarantee operating continuity at suitable power, at the same time minimizing energy consumption, in line with the current directives concerning energy saving.

A further object of the present invention is to reduce operating costs as a consequence of the reduced energy consumption.

Another important object of the present invention is to supply the power that is necessary and sufficient for the various applications at any moment and with continuity, and always guaranteeing at least 60% of the refrigeration capacity of the refrigerating unit, even in case of failure or accidental breakage of one or more components and in case of failure of the electronic unit.

Another important object of the present invention is to regularize the supply of refrigeration capacity, which is modulated with continuity, while pressure variations are limited, and consequently also temperature variations in the cold source.

Furthermore, in this way the best conditions for the preservation of the product are guaranteed.

It should also be underlined that the inverters are extremely reliable and relatively simple to install and require minimum maintenance.

These and other direct and complementary objects are achieved by the new type of refrigerating unit with multiple compressors regulated independently by means of an electronic inverter.

Thus, the new refrigerating unit comprises at least one refrigeration circuit where the condenser, the expansion valves and the evaporators are connected to at least two compressors arranged in parallel, both regulated independently by means of an inverter.

Each inverter adapts the refrigerating capacity according to the thermal load, regulating the power absorbed by the corresponding compressor on the basis of the data processed by the control unit, which assesses the operating conditions and thus determines the operating parameters of the compressors. In the preferred embodiment of the invention, the new refrigerating unit comprises at least two compressors arranged in parallel, where the pressure on the suction line is measured on the common line for said two or more compressors, evaluating the pressure variation between the measured value and the set value.

In this way, it is possible to regulate the rotation speed of the compressor motor to reach the set pressure value, at the same time minimizing the power absorbed by the compressor itself.

The refrigeration capacity delivered can thus be modulated continuously from 30% to 120% of the rated capacity.

The inverter, in fact, calculates the position of the rotor field of the compressor motor according to the values of the stator current, which is modified in order to obtain the most favourable position between the two fields.

Furthermore, the new refrigerating unit makes it possible to calculate in real time and immediately, via a control unit, any risk like a return of coolant or high power absorption, for example due to scarce lubrication.

According to the invention, furthermore, the coolant loading system is guided and controlled.

The characteristics of the present invention will be highlighted in greater detail in the following description, with reference to the drawings attached as non-limiting examples.

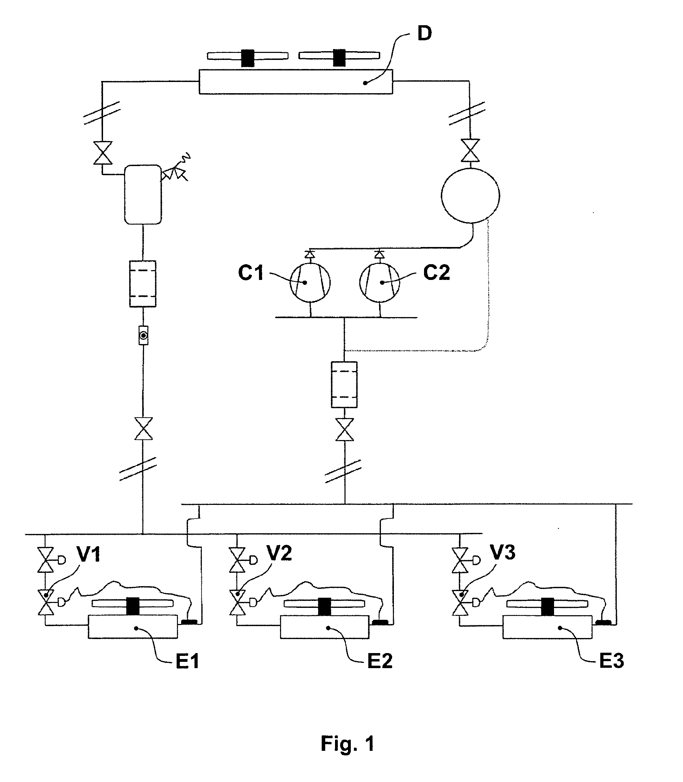

Figure 1 shows a diagram of the refrigeration circuit of the new refrigerating unit with multiple compressors.

The new refrigerating unit comprises at least one refrigeration circuit where the condenser (D), one or more thermostatic expansion valves (V1, V2, V3, ...) and one or more evaporators (E1, E2, E3, ...) are connected to at least two compressors (C1, C2, ...) arranged in parallel, both with independent motors regulated by means of their own inverter.

The pressure is measured on the common manifold of said two or more compressors (C1, C2, ...), in order to evaluate the pressure variation between the measured value and the set value.

According to the value of said pressure variation, the motor with inverter regulates the power absorbed by the corresponding compressor (C1, C2, ...).

At least one control unit controls said inverters, increasing/decreasing the rotation frequency and speed of the motors of the compressors (C1, C2, ...) according to the data received, which are for example the data regarding the input and/or output pressures and temperatures according to the system's requirements.

Therefore, with reference to the above description and the attached drawings, the following claims are expressed.

## Claims

1. Refrigerating unit with at least one refrigeration circuit with two or more compressors (C1, C2, ...,), **characterized in that** each one of said compressors (C1, C2, ...) is equipped with a motor regulated by its own inverter.

2. Refrigerating unit according to claim 1, **characterized in that** the rotation speeds of said motors of said compressors (C1, C2) are independent of one another, and wherein said rotation speeds of the motors of two or more of said compressors (C1, C2, ...) vary according to the operating conditions.

3. Refrigerating unit according to claims 1, 2, **characterized in that** it also comprises at least one electronic control unit suited to process the data concerning said operating conditions and to vary the rotation speeds of two or more of said compressors (C1, C2, ...) accordingly.
